(19) Europäisches Patentamt
European Patent Office
Office européen des brevets

(11) Veröffentlichungsnummer: **0 095 441**
**B1**

(12) # EUROPÄISCHE PATENTSCHRIFT

(45) Veröffentlichungstag der Patentschrift: **27.11.85**

(51) Int. Cl.⁴: **C 09 B 45/16** // D06P1/10

(21) Anmeldenummer: **83810191.3**

(22) Anmeldetag: **05.05.83**

(54) **Asymmetrische 1:2-Chromkomplexfarbstoffe.**

(30) Priorität: **14.05.82 CH 3016/82**
**12.01.83 CH 145/83**
**12.01.83 CH 146/83**

(43) Veröffentlichungstag der Anmeldung:
**30.11.83 Patentblatt 83/48**

(45) Bekanntmachung des Hinweises auf die Patenterteilung:
**27.11.85 Patentblatt 85/48**

(84) Benannte Vertragsstaaten:
**CH DE FR GB IT LI**

(56) Entgegenhaltungen:
**FR - A - 702 388**
**FR - A - 1 220 529**
**FR - A - 1 220 724**
**FR - A - 1 494 676**
**US - A - 1 887 602**

**COLOUR INDEX, SOCIETY OF DYERS AND COLORISTS, 3rd EDITION, 1971, Bradford, GB, Band 4, Seiten 4066- 4084, Formeln 14641, 14645, 14770, 15707, 15710**

(73) Patentinhaber: **CIBA-GEIGY AG, Postfach, CH-4002 Basel (CH)**

(72) Erfinder: **Beffa, Fabio, Dr., Burgstrasse 38, CH-4125 Riehen (CH)**
Erfinder: **Püntener, Alois, Dr., Pulverweg 13, CH-4310 Rheinfelden (CH)**
Erfinder: **Loew, Peter, Dr., Concordiastrasse 23, CH-4132 Münchenstein (CH)**

**EP 0 095 441 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft Chromkomplexfarbstoffe, die der Formel I

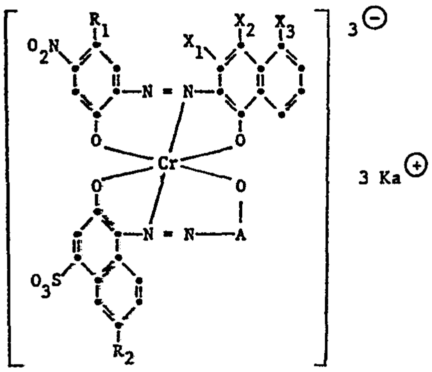 (I)

entsprechen, in der

A den Rest von 1-Hydroxynaphthalin oder 2-Hydroxynaphthalin,

$R_1$ Wasserstoff, Chlor oder Methyl,

$R_2$ Wasserstoff, Nitro oder Chlor, und

$Ka^+$ ein Kation bedeutet und von den Substituenten

$X_1$, $X_2$ und $X_3$ einer $SO_3$-Gruppe und die beiden anderen Wasserstoff darstellen, wobei $X_3$ Wasserstoff ist, wenn $R_1$ Chlor und $R_2$ Wasserstoff bedeutet.

$Ka^+$ stellt ein Kation, beispielsweise ein Alkalikation, wie Lithium, Kalium, oder vorzugsweise Natrium, dar. Ferner kann $Ka^+$ ein Ammoniumkation oder das Ammoniumsalz eines organischen Amins sein.

In bevorzugten Farbstoffen der Formel I bedeutet $R_1$ Chlor oder insbesondere Wasserstoff.

$R_2$ ist vorzugsweise Wasserstoff oder Nitro.

Von den Substituenten $X_1$, $X_2$ und $X_3$ stellt einer eine $SO_3$-Gruppe und die beiden anderen Wasserstoff dar. Bevorzugt sind solche Farbstoffe, bei denen einer der Substituenten $X_2$ oder $X_3$ eine $SO_3$-Gruppe ist und der andere Wasserstoff.

Von besonderer Bedeutung sind Verbindungen der Formel II

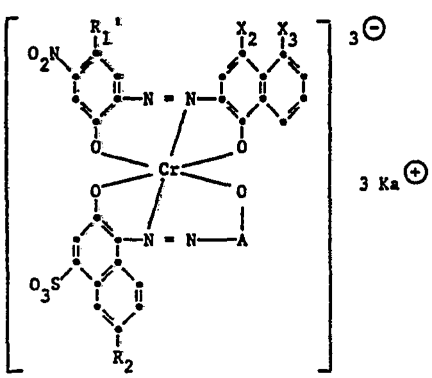 (II)

in der

A den Rest von 1-Hydroxynaphthalin oder 2-Hydroxynaphthalin,

$R_1'$ Chlor oder insbesondere Wasserstoff,

$R_2$ Wasserstoff oder Nitro,

$Ka^+$ ein Kation und von den Substituenten $X_2$ und $X_3$ einer eine $SO_3$-Gruppe und der andere Wasserstoff bedeutet, wobei $X_3$ Wasserstoff ist, wenn $R_1'$ Chlor und $R_2$ Wasserstoff ist.

Die erfindungsgemässen Farbstoffe können nach an sich bekannten Methoden hergestellt werden, beispielsweise indem man den 1:1-Chromkomplex eines Farbstoffes der Formel III

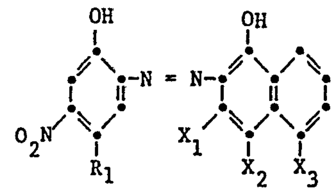 (III)

oder eines Farbstoffes der Formel IV

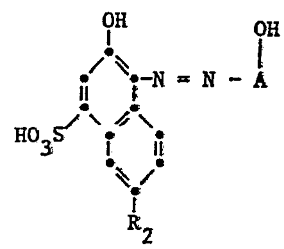 (IV)

worin $R_1$, $R_2$ und A die bei der Formel I angegebene Bedeutung aufweisen und von den Substituenten $X_1$, $X_2$ und $X_3$ einer eine $SO_3H$-Gruppe und die beiden anderen Wasserstoff bedeuten, wobei $X_3$ Wasserstoff ist, wenn $R_1$ Chlor und $R_2$ Wasserstoff bedeutet, herstellt und diesen dann mit dem nicht metallisierten Farbstoff der Formel IV bzw. III umsetzt.

Die Herstellung des 1:1-Chromkomplexes wird nach an sich bekannten Methoden, vorzugsweise in saurer Lösung mit Chrom-III-salzen durchgeführt. Anschliessend wird der 1:1-Chromkomplex in schwach saurem, neutralem oder schwach alkalischem Medium mit der Azoverbindung der Formel IV oder III umgesetzt.

Man kann auch ein Gemisch der Azofarbstoffe der Formeln III und IV mit einem Chromierungsmittel umsetzen. In diesem Falle entsteht ein Gemisch von 1:2-Komplexen, welches neben dem Chromkomplex der Formel I noch die beiden symmetrischen 1:2-Komplexe, enthaltend je zwei Moleküle Farbstoff der Formel III oder IV, aufweist.

Die nach dem obigen Verfahren erhältlichen neuen Chromkomplexfarbstoffe der Formel I werden in Form ihrer Salze, insbesondere Alkali-, vor allem Natrium- oder Lithiumsalze, oder auch Ammoniumsalze oder Salze von organischen Aminen mit positiv geladenem Stickstoffatom isoliert und eignen sich zum Färben und Bedrucken verschiedener Stoffe, ggf. in Gegenwart eines Egalisierhilfsmittels, vor allem aber zum Färben und Bedrucken stickstoffhaltiger Materialien, wie Seide, Wolle, sowie auch für synthetische Fasern aus Polyamiden oder Polyurethanen und insbesondere für Leder.

Man erhält graublaue, blaue oder marineblaue Färbungen mit guten Echtheiten, insbesondere Licht- und Nassechtheiten.

Die bevorzugte Verwendung der erfindungsgemässen Farbstoffe liegt im Färben von Wolle,

Polyamid und insbesondere von Pelzen oder Leder, wobei alle Ledersorten geeignet sind, z. B. Chromleder, nachgegerbtes Leder oder Velourleder von Ziege, Rind oder Schwein.

Vor allem sind die erfindungsgemässen Farbstoffe zum Färben von Leder mit Farbstoffmischungen geeignet, insbesondere im Gemisch mit einem oder mehreren geeigneten 1:2-Metallkomplexfarbstoffen.

Vorzugsweise verwendet man eine Farbstoffmischung, enthaltend

a) einen blauen 1:2-Metallkomplex der oben angegebenen Formel I,

b) einen roten oder rotbraunen 1:2-Chrom- oder -Kobaltkomplex des Farbstoffes der Formel V

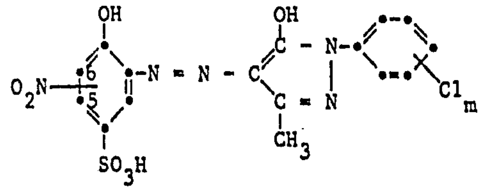
(V)

worin m eine ganze Zahl von 0 bis 2 bedeutet und die Nitrogruppe in 5- oder 6-Stellung angeordnet ist, sowie

c) einen gelben 1:2-Kobaltkomplex des Farbstoffes der Formel VI

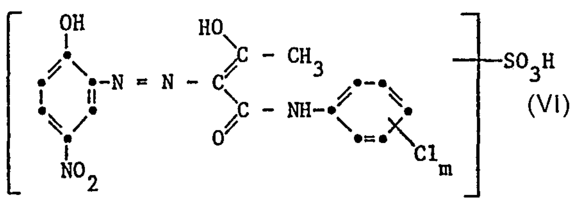
(VI)

worin m die oben angegebene Bedeutung hat, oder einen gelb-braunen 1:2-Kobalt- oder -Chromkomplex des Farbstoffes der Formel VII

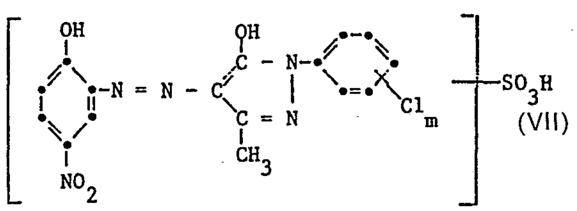
(VII)

worin m die oben angegebene Bedeutung hat.

Gegenüber dem nächstvergleichbaren bekannten Farbstoff, welcher gemäss der FR-PS 1220529, Beispiel 2 (1. Farbstoff der Tabelle), hergestellt wurde, und der anstelle der Sulfogruppe $X_1$, $X_2$ oder $X_3$ eine Sulfogruppe in 8-Stellung des α-Naphthols aufweist, zeichnen sich die erfindungsgemässen Farbstoffe, bei denen $X_2$ oder $X_3$ eine Sulfogruppe ist, durch überraschend bessere Nassechtheiten aus. Ausserdem sind sie in der Säureechtheit bei pH 3 besser, was insbesondere beim Färben von Leder zum Tragen kommt.

Die nachfolgenden Beispiele dienen der Erläuterung der Erfindung, ohne sie darauf zu beschränken. Teile bedeuten Gewichtsteile und Prozente Gewichtsprozente. Die Temperaturen sind in Grad Celsius angegeben.

*Beispiel 1:*

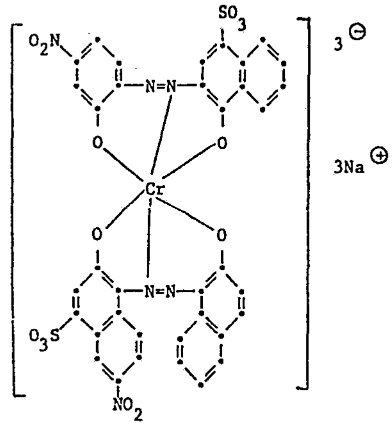

43,9 Teile der komplexen Chromverbindung vom Typus 1 Atom Chrom: 1 Molekülfarbstoff, welche 5,2 Teile Chrom und 38,9 Teile Monoazofarbstoff aus diazotiertem 5-Nitro-2-amino-1-hydroxybenzol und 1-Hydroxynaphthalin-4-sulfonsäure enthält, und 43,9 Teile des Monoazofarbstoffes aus diazotierter 6-Nitro-1-amino-2-hydroxynaphthalin-4-sulfonsäure und 2-Hydroxynaphthalin werden in 800 Teilen Wasser auf 95° erwärmt, mit Natriumhydroxid auf pH 8 gestellt und so lange bei dieser Temperatur und diesem pH gerührt, bis die Ausgangsprodukte nicht mehr nachweisbar sind. Nach beendeter Reaktion wird der Farbstoff durch Sprütrockung isoliert. Man erhält ein dunkles Pulver, das sich in Wasser mit blauer Farbe löst und Leder in lichtechten marine-blauen Tönen färbt.

*Beispiel 2:*

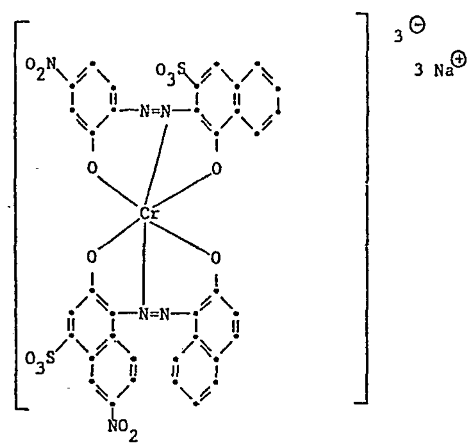

Der 1:1-Chromkomplex, der 38,9 Teile des Monoazofarbstoffes aus diazotiertem 5-Nitro-2-amino-1-hydroxybenzol und 1-Hydroxynaphthalin-3-sulfonsäure sowie 5,2 Teile Chrom enthält, wird in 500 Teile Wasser eingetragen und mit 43,9 Teilen des Monoazofarbstoffes aus diazotierter 6-Nitro-1-amino-2-hydroxynaphthalin-4-sulfonsäure und 2-Hydroxynaphthalin versetzt und unter Rühren bei pH 7-7,5 und 85-90° gehalten, bis die Bildung des asymmetrischen 1:2-Komplexfarbstoffes beendet ist. Nach beendeter Reaktion wird der Farbstoff durch Eindampfen isoliert. Man erhält ein dunkles Pulver, das sich in Wasser mit blauer Farbe löst und Leder in lichtechten marineblauen Tönen färbt.

*Beispiel 3:*

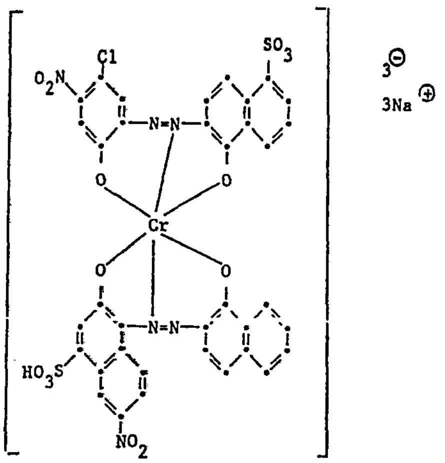

In 500 Teilen Wasser suspendiert man 48,9 Teile der komplexen Chromverbindungen vom Typus 1 Atom Chrom: 1 Molekül Farbstoff, welche 5,2 Teile Chrom und 43,9 Teile Monoazofarbstoff aus diazotierter 6-Nitro-1-amino-2-hydroxy-napthalin-4-sulfonsäure und 1-Hydroxynaphthalin enthält, mit 42,4 Teilen des Monoazofarbstoffes aus diazotiertem 5-Nitro-4-chlor-2-amino-1-hydroxybenzol und 1-Hydroxynaphthalin-5-sulfonsäure. Das Reaktionsgemisch wird auf 90-95° erwärmt, mit Natriumhydroxid auf pH 7-7,5 gestellt und so lange bei dieser Temperatur und konstantem pH gehalten, bis die Ausgangsprodukte verschwunden sind. Nach beendeter Reaktion wird der Farbstoff durch Eindampfen isoliert. Man erhält ein dunkles Pulver, das sich in Wasser mit blauer Farbe löst und Leder in lichtechten marineblauen Tönen färbt.

In der nachfolgenden Tabelle sind weitere Komplexfarbstoffe angeführt, die nach den Angaben der Beispiele 1-3 aus den Farbstoffen der Kolonnen I und II erhältlich sind, wobei jeweils einer der Farbstoffe aus beiden Kolonnen als 1:1-Chromkomplex eingesetzt wird. Die Farbstoffe färben Leder, Wolle und Polyamid in graublauen, blauen oder dunkelblauen bis marineblauen Nuancen.

*Tabelle*

| Nr. | I | II |
|---|---|---|
| 1 | 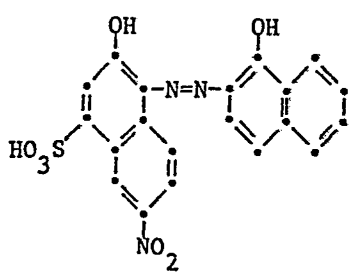 | 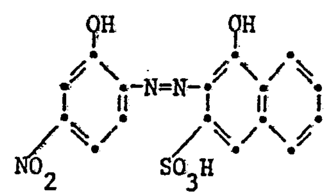 |
| 2 | 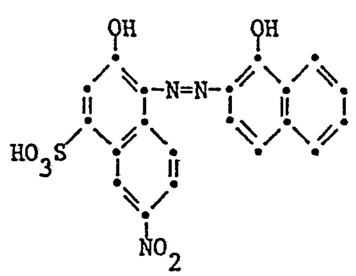 | 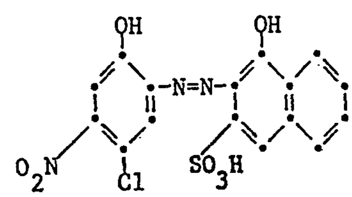 |
| 3 | 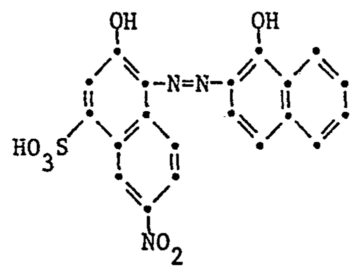 | 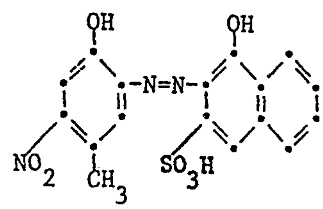 |

*Tabelle*

| Nr. | I | II |
|---|---|---|
| 4 | 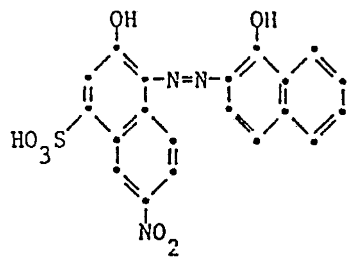 | 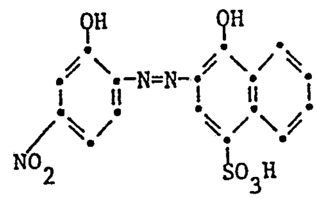 |
| 5 | 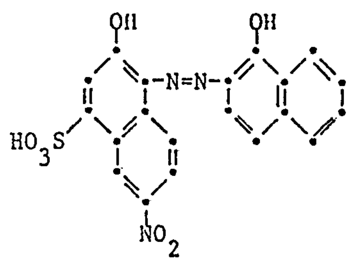 | 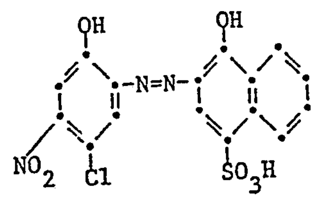 |
| 6 | 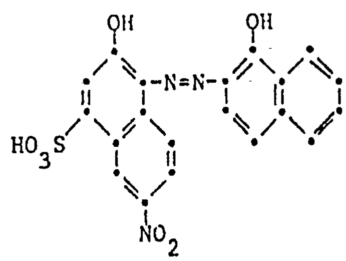 | 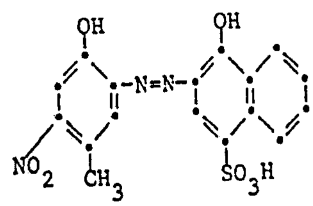 |
| 7 | 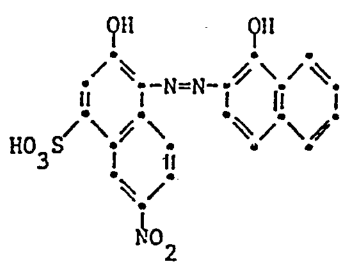 | 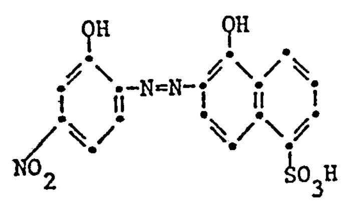 |
| 8 | 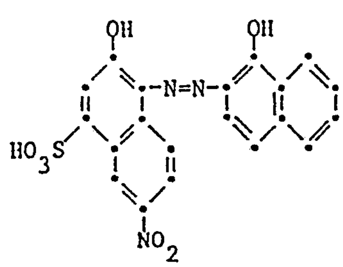 | 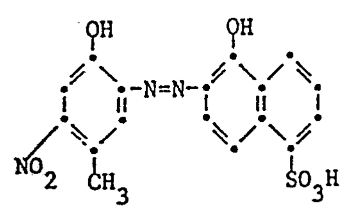 |
| 9 | 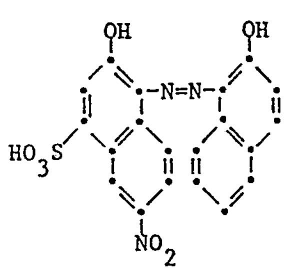 | 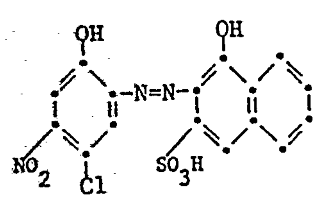 |

*Tabelle*

| Nr. | I | II |
|---|---|---|
| 10 | 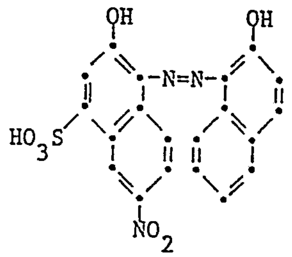 | 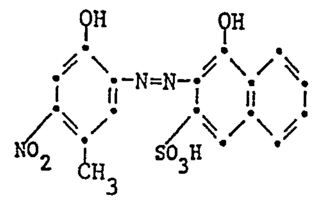 |
| 11 | 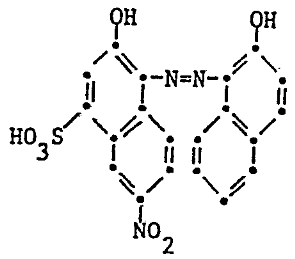 | 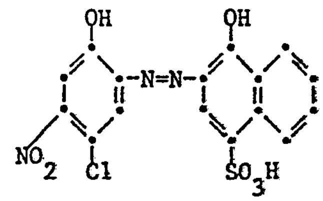 |
| 12 | 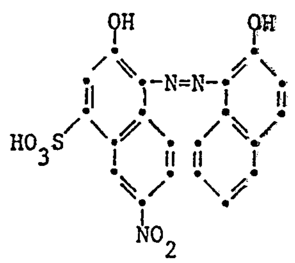 | 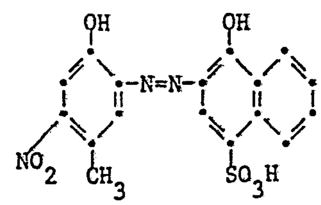 |
| 13 | 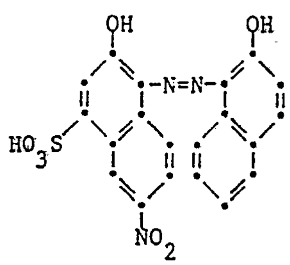 | 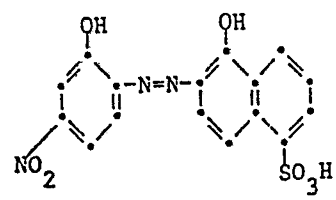 |
| 14 | 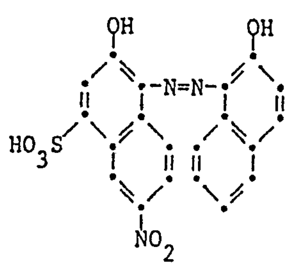 | 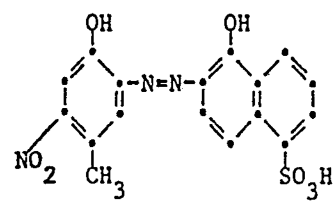 |
| 15 | 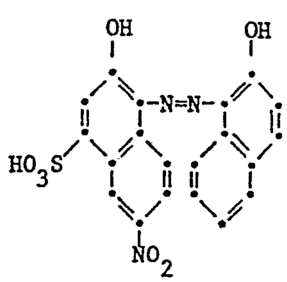 | 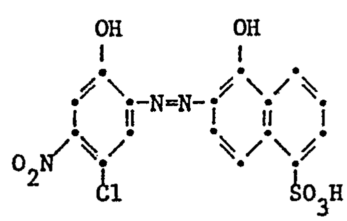 |

*Beispiel 4:*

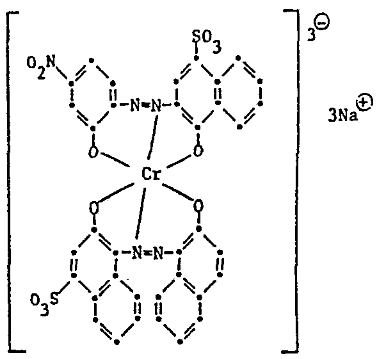

In 800 Teilen Wasser suspendiert man 44,4 Teile der komplexen Chromverbindung vom Typus 1 Atom Chrom/1 Molekül Farbstoff, welche 5,2 Teile Chrom und 39,4 Teile Monoazofarbstoff aus diazotierter 1-Amino-2-hydroxynaphthalin-4-sulfonsäure und 2-Hydroxynaphthalin enthält, mit 38,9 Teilen Monoazofarbstoff aus diazotiertem 5-Nitro-2-amino-1-hydroxybenzol und 1-Hydroxynaphthalin-4-sulfonsäure. Das Reaktionsgemisch wird auf 90-95° erwärmt, mit Natriumhydroxid auf pH 7,5-8 gestellt und so lange bei dieser Temperatur gerührt, bis die Ausgangsprodukte nicht mehr nachweisbar sind. Nach beendeter Reaktion wird der Farbstoff durch Natriumchloridzugabe abgeschieden, abfiltriert und getrocknet. Er stellt ein dunkles Pulver dar, das sich in Wasser mit blauer Farbe löst und Leder, Polyamid oder Wolle in blauen Tönen von guten Echtheiten färbt.

*Beispiel 5:*

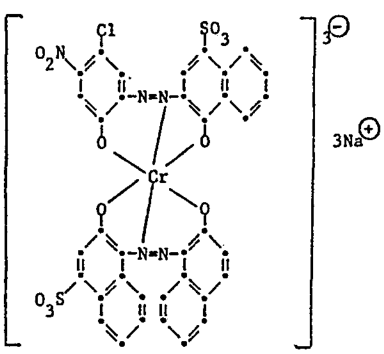

47,4 Teile der komplexen Chromverbindung vom Typus 1 Atom Chrom/1 Molekül Farbstoff, welche 5,2 Teile Chrom und 42,4 Teile Monoazofarbstoff aus diazotiertem 5-Nitro-4-chlor-2-amino-1-hydroxybenzol und 1-Hydroxynaphthalin-4-sulfonsäure enthält, und 39,4 Teile des Monoazofarbstoffes aus diazotierter 1-Amino-2-hydroxynaphthalin-4-sulfonsäure und 2-Hydroxynaphthalin werden in 800 Teilen Wasser auf 95° erwärmt, mit Natriumhydroxid auf pH 8 gestellt und so lange bei dieser Temperatur gerührt, bis die Ausgangsfarbstoffe nicht mehr nachweisbar sind. Nach beendeter Reaktion wird der Farbstoff der obigen Formel durch Natriumchloridzugabe abgeschieden, abfiltriert und getrocknet. Er stellt ein dunkles Pulver dar, das sich in Wasser mit blauer Farbe löst und Wolle, Polyamid sowie Leder in blauen Tönen von guten Echtheiten färbt.

*Beispiel 6:*

In 800 Teile Wasser trägt man 39,4 Teile des Monoazofarbstoffes aus diazotierter 1-Amino-2-hydroxynaphthalin-4-sulfonsäure und 2-Hydroxynaphthalin sowie 38,9 Teile des Monoazofarbstoffs aus diazotiertem 5-Nitro-2-amino-1-hydroxybenzol und 1-Hydroxynaphthalin-4-sulfonsäure ein und erwärmt auf 80°. Bei dieser Temperatur wird mit Natriumhydroxid auf pH 7,5-8 gestellt und mit einer Lösung von chromsalicylsaurem Natrium versetzt, die 5,7 Teile Chrom enthält. Die Reaktionslösung wird bis zur Beendigung der Metallisierung unter Rückfluss gehalten. Anschliessend wird das Wasser durch Eindampfen bzw. Sprühtrocknung entfernt. Man erhält ein dunkles Pulver, das sich in Wasser mit blauer Farbe löst und Leder, Polyamid und Wolle in blauen bis marineblauen Tönen von guter Echtheit färbt.

Der Farbstoff ist eine Mischung aus folgenden metallkomplexen

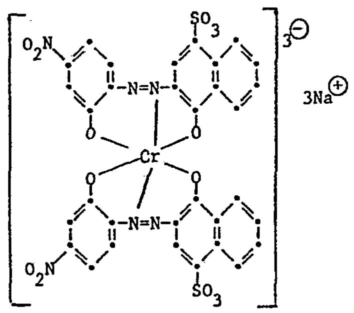

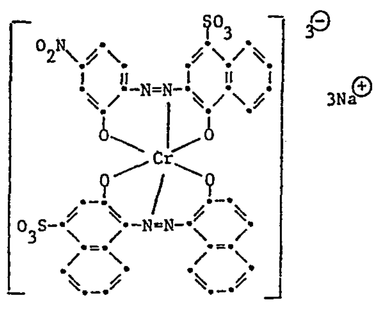

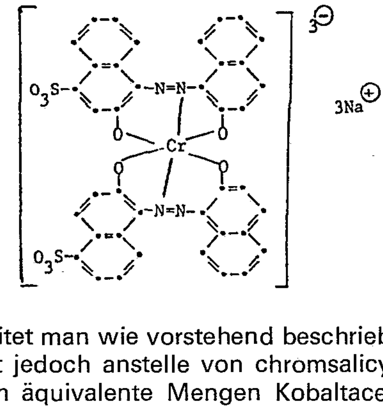

Arbeitet man wie vorstehend beschrieben, verwendet jedoch anstelle von chromsalicylsaurem Natrium äquivalente Mengen Kobaltacetat oder -sulfat, so erhält man ein Gemisch der den obigen Formeln ensprechenden Kobaltkomplexe, welches Leder, Polyamid oder Wolle in rotstichig marineblauen Tönen von guter Echtheit färbt.

In der nachfolgenden Tabelle sind weitere Komplexfarbstoffe angeführt, die nach den Angaben der Beispiele 4 und 5 aus den Farbstoffen der Kolonnen I und II erhältlich sind, wobei jeweils einer der Farbstoffe aus beiden Kolonnen als 1:1-Chromkomplex eingesetzt wird. Die Farbstoffe färben Leder, Wolle und Polyamid in blauen bis marineblauen Nuancen.

*Tabelle*

| Nr. | I | II |
|---|---|---|
| 1 | 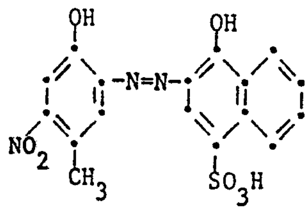 | 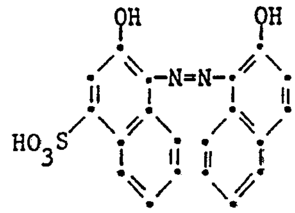 |
| 2 | 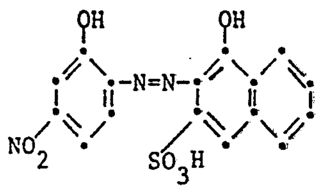 | 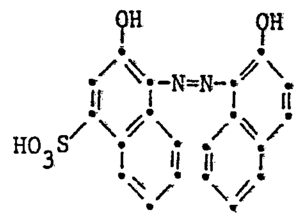 |
| 3 | 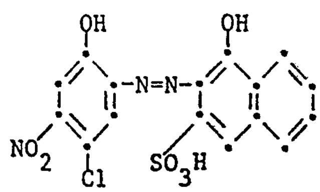 | 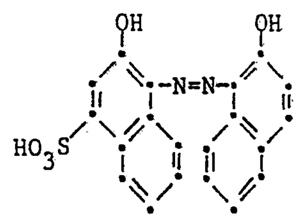 |
| 4 | 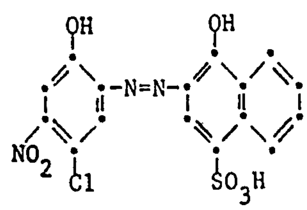 | 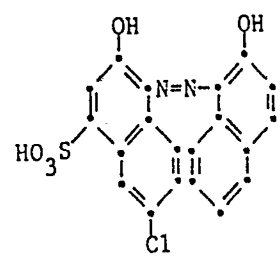 |
| 5 | 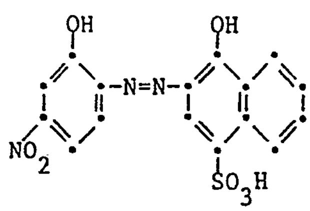 | 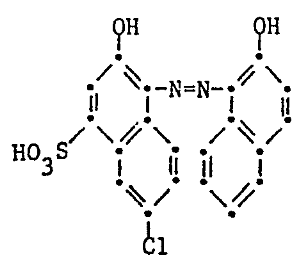 |

*Beispiel 7:*

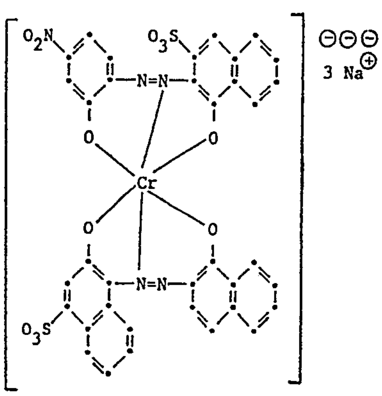

In 500 Teilen Wasser suspendiert man 44,4 Teile der komplexen Chromverbindung vom Typus 1 Atom Chrom/1 Molekül Farbstoff, welche 5,2 Teile Chrom und 39,4 Teile Monoazofarbstoff aus diazotierter 1-Amino-2-hydroxynaphthalin-4-sulfonsäure und 1-Hydroxynaphthalin enthält, mit 38,9 Teilen Monoazofarbstoff aus diazotiertem 5-Nitro-2-amino-1-hydroxybenzol und 1-Hydroxynaphthalin-3-sulfonsäure. Das Reaktionsgemisch wird auf 85-90° erwärmt, mit Natriumhydroxid auf pH 7,5-8 gestellt und so lange bei dieser Temperatur und diesem pH gerührt, bis die Ausgangsprodukte nicht mehr nachweisbar sind. Nach beendeter Reaktion wird der Farbstoff durch Eindampfen isoliert. Er stellt ein dunkles Pulver dar, das sich in Wasser mit blauer Farbe löst und Leder in dunkelblauen Tönen färbt.

*Beispiel 8:*

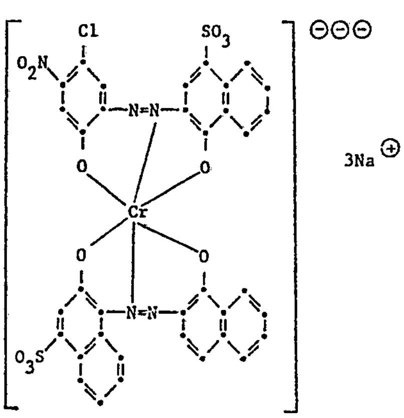

44,4 Teile der komplexen Chromverbindung vom Typus 1 Atom Chrom/1 Molekül Farbstoff, welche 5,2 Teile Chrom und 39,4 Teile Monoazofarbstoff aus diazotierter 1-Amino-2-hydroxynaphthalin-4-sulfonsäure und 1-Hydroxynaphthalin enthält, und 42,4 Teile des Monoazofarbstoffs aus diazotiertem 5-Nitro-4-chlor-2-amino-1-hydroxybenzol und 1-Hydroxynaphthalin-4-sulfonsäure werden in 750 Teilen Wasser auf 80-85° erwärmt, mit Natriumhydroxid auf pH 7-7,5 gestellt und so lange bei dieser Temperatur und bei konstantem pH gerührt, bis die Ausgangsprodukte verschwunden sind. Nach beendeter Reaktion wird das Wasser durch Sprühtrocknen entfernt. Man erhält ein dunkles Pulver, das sich in Wasser mit blauer Farbe löst und Leder in dunkelblauen Tönen von guter Lichtechtheit färbt.

*Beispiel 9:*

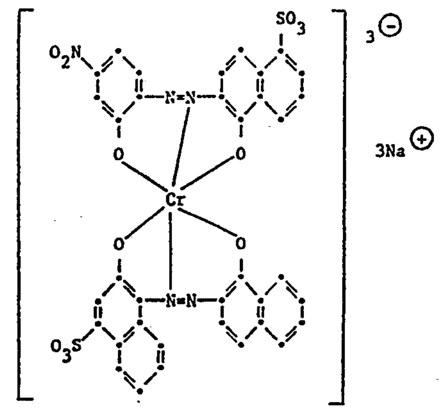

Der 1:1-Chromkomplex, der 39,4 Teile des Monoazofarbstoffs aus diazotierter 1-Amino-2-hydroxynaphthalin-4-sulfonsäure und 1-Hydroxynaphthalin sowie 5,2 Teile Chrom enthält, wird in 500 Teile Wasser eingetragen und mit 38,9 Teilen Monoazofarbstoff aus diazotiertem 5-Nitro-2-amino-1-hydroxybenzol und 1-Hydroxynaphthalin-5-sulfonsäure versetzt und bei pH 7-7,5 und 80-85° so lange gerührt, bis die Ausgangsprodukte nicht mehr nachweisbar sind. Anschliessend wird das Produkt durch Sprühtrocknung isoliert. Man erhält ein dunkles Pulver, das sich in Wasser mit blauer Farbe löst und Leder in lichtechten, dunkelblauen Tönen färbt.

In der nachfolgenden Tabelle sind weitere Komplexfarbstoffe angeführt, die nach den Angaben der Beispiele 7 bis 9 aus den Farbstoffen der Kolonnen I und II erhältlich sind, wobei jeweils einer der Farbstoffe aus beiden Kolonnen als 1:1-Chromkomplex eingesetzt wird. Die Farbstoffe färben Leder, Wolle und Polyamid in graublauen, blauen, oder dunkelblauen bis marineblauen Nuancen.

*Tabelle* ⟶

*Färbevorschrift für Leder*

100 Teile Bekleidungsveloursleder (Trockengewicht) werden bei 50° in einer Lösung von 1000 Vol.-Teile Wasser und 2 Teilen Ammoniak 24%ige während 2 h aufgewalkt und anschliessend bei 60° in einer Lösung von 1000 Vol.-Teile Wasser, 2 Teilen Ammoniak 24%ig und 6 Teilen Farbstoff aus Beispiel 2 während 1 h gefärbt. Hierauf gibt man eine Lösung von 40 Vol.-Teile Wasser und 4 Teilen Ameisensäure 85%ig zu und färbt noch weitere 30 min. Dann werden die Leder gut gespült und ggf. noch mit 2 Teilen eines Dicyandiamidformaldehyd-Kondensationsproduktes während 30 min bei 50° behandelt.

In gleicher Weise lassen sich andere Veloursleder sowie Handschuhleder färben.

Die so erhaltenen dunkelblauen Färbungen zeichnen sich durch gute Echtheiten und gute Deckvermögen aus.

*Tabelle*

| Nr. | I | II |
|---|---|---|
| 1 | 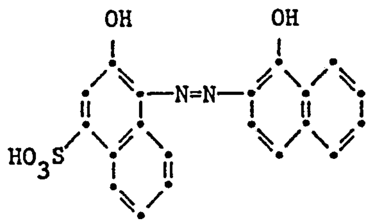 | 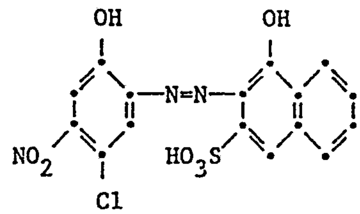 |
| 2 | 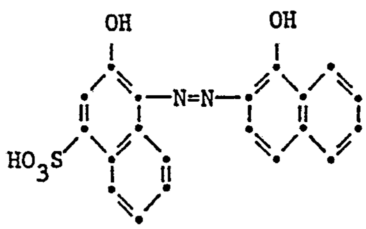 | 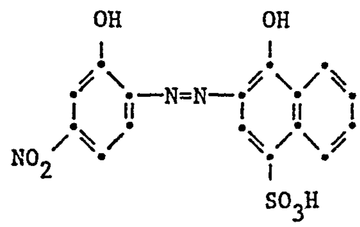 |
| 3 | 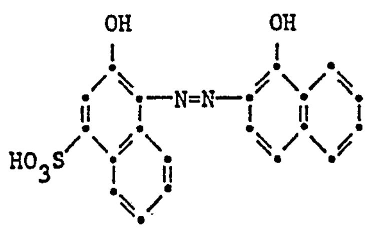 | 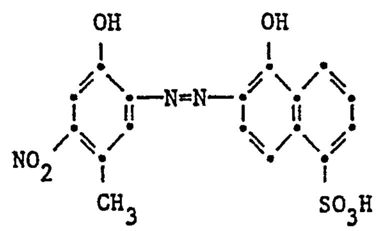 |
| 4 | 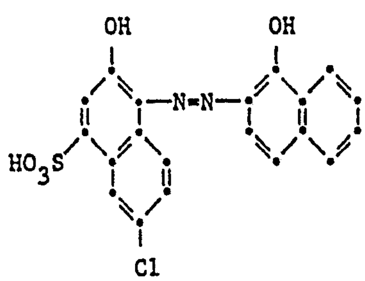 | 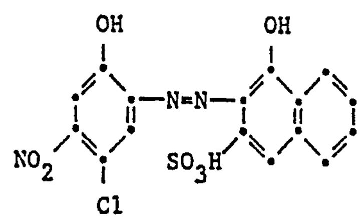 |
| 5 | 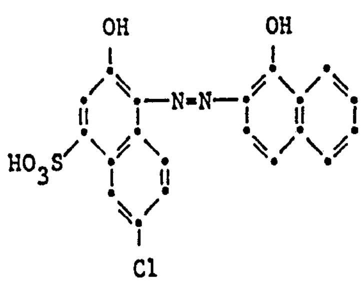 | 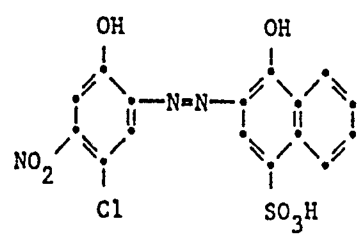 |
| 6 | 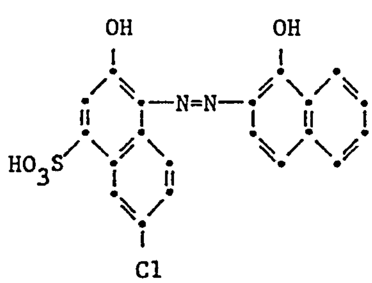 | 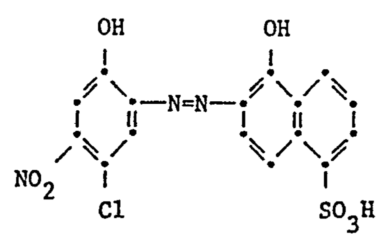 |

*Tabelle*

| Nr. | I | II |
|---|---|---|
| 7 | 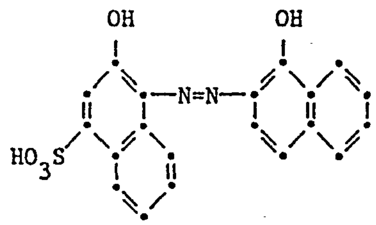 | 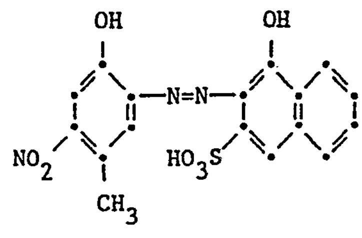 |
| 8 | 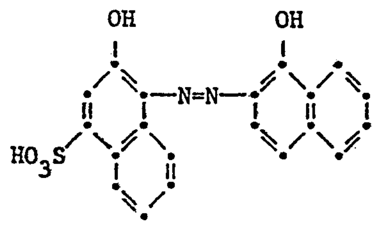 | 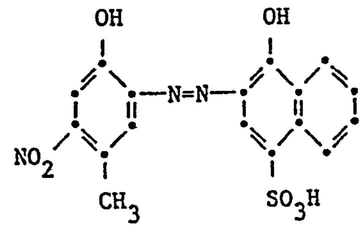 |

*Färbevorschrift für Polyamid*

100 Teile Polaymidstrickgarn werden bei 50° C in ein Färbebad eingeführt, das auf 4000 Teile Wasser 2 Teile des Farbstoffes des Beispiels 4, 4 Teile Ammoniumsulfat und 2 Teile eines Egalisierhilfsmittels enthält. Die Flotte wird im Verlaufe von 45 min zum Sieden gebracht und während weiteren 45 min bei Kochtemperatur gehalten. Darauf wird das Färbegut herausgenommen, mit kaltem Wasser gründlich gespült und getrocknet. Man erhält ein blaugefärbtes Polyamid mit guten Echtheitseigenschaften.

*Färbevorschrift für Wolle*

100 Teile Wollstrickgarn werden bei 50° C in ein Färbebad eingeführt, das auf 4000 Teile Wasser 2 Teile des Farbstoffs des Beispiels 8, 4 Teile Essigsäure 80% und 2 Teile eines Egalisierhilfsmittels enthält. Die Flotte wird im Verlaufe von 45 min zum Sieden gebracht und während weiteren 45 min bei Kochtemperatur gehalten. Darauf wird das Färbegut herausgenommen, mit kaltem Wasser gründlich gespült und getrocknet. Man erhält eine graublau gefärbte Wolle mit guten Echtheitseigenschaften.

## Patentansprüche

1. Metallkomplexfarbstoffe, die der Formel (I)

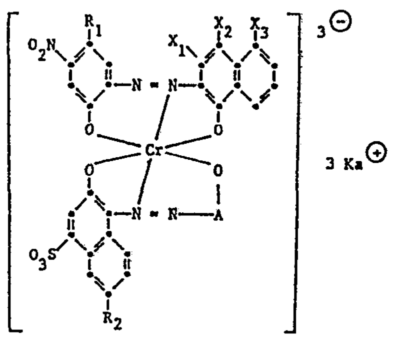

(I)

entsprechen, in der

A den Rest von 1-Hydroxynaphthalin oder 2-Hydroxynaphthalin,

$R_1$ Wasserstoff, Chlor oder Methyl,

$R_2$ Wasserstoff, Nitro oder Chlor, und

$Ka^+$ ein Kation bedeutet, und von den Substituenten

$X_1$, $X_2$ und $X_3$ einer eine $SO_3$-Gruppe und die beiden anderen Wasserstoff darstellen, wobei $X_3$ Wasserstoff ist, wenn $R_1$ Chlor und $R_2$ Wasserstoff bedeutet.

2. Farbstoffe gemäss Anspruch 1, worin $R_1$ Chlor oder insbesondere Wasserstoff ist.

3. Farbstoffe gemäss Anspruch 1, worin einer der Substituenten $X_2$ oder $X_3$ eine $SO_3$-Gruppe ist und der andere Wasserstoff.

4. Farbstoffe der Formel (II)

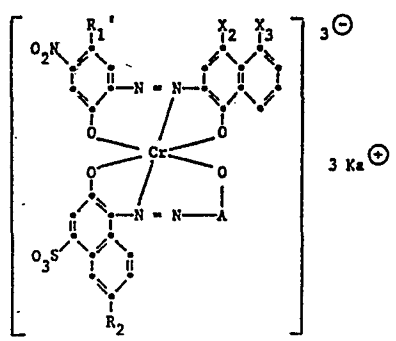

(II)

mium complex of a dye of the Formula (III) or of a dye of the Formula (IV) and subsequently reacting said complex with the non-metallised dye of the Formula (IV) or (III).

6. Use of a dye of the Formula (I) according to Claim1 for dyeing wool, polyamid and in particular leather or furs.

in der

A den Rest von 1-Hydroxynaphthalin oder 2-Hydroxynaphthalin,

$R_1'$ Chlor oder insbesondere Wasserstoff,

$R_2$ Wasserstoff oder Nitro,

$Ka^{\oplus}$ ein Kation und von den Substituenten $X_2$ und $X_3$ einer eine $SO_3$-Gruppe und der andere Wasserstoff bedeutet,

wobei $X_3$ Wasserstoff ist, wenn $R_1'$ Chlor und $R_2$ Wasserstoff ist.

5. Verfahren zur Herstellung von Farbstoffen gemäss Anspruch 1 der Formel (I), dadurch gekennzeichnet, dass man ein Gemisch aus dem Farbstoff der Formel (III)

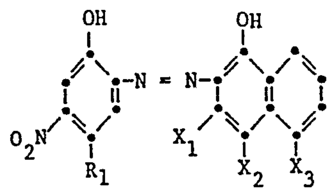

(III)

und dem Farbstoff der Formel (IV)

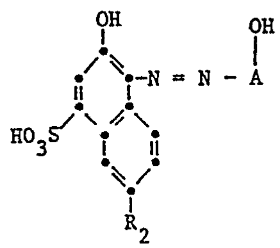

(IV)

worin $R_1$, $R_2$ und A die bei der Formel (I) angegebene Bedeutung aufweisen und von den Substituenten $X_1$, $X_2$ und $X_3$ einer eine $SO_3H$-Gruppe und die beiden anderen Wasserstoff bedeuten, wobei $X_3$ Wasserstoff ist, wenn $R_1$ Chlor und $R_2$ Wasserstoff bedeutet, mit einer Chrom abgebenden Verbindung behandelt, oder dass man den 1:1-Chromkomplex eines Farbstoffes der Formel (III) oder eines Farbstoffes der Formel (IV) herstellt und diesen dann mit dem nicht metallisierten Farbstoff der Formel (IV) bzw. (III) umsetzt.

6. Verwendung von Farbstoffen gemäss Anspruch 1, der Formel (I) zum Färben von Wolle, Polyamid und insbesondere von Leder oder Pelzen.

## Claims

1. A metal-complex dye which corresponds to the formula (I)

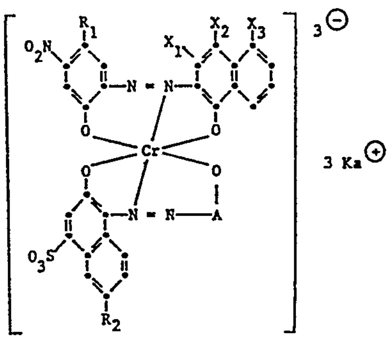

(I)

wherein

A is the radical of 1-hydroxynapthalene or 2-hydroxynaphthalene,

$R_1$ is hydrogen, chlorine or methyl,

$R_2$ is hydrogen, nitro or chlorine, and

$Ka^{\oplus}$ is a cation, and one of

$X_1$, $X_2$ and $X_3$ is an $SO_3$ group and the other two are hydrogen, $X_3$ being hydrogen when $R_1$ is chlorine and $R_2$ is hydrogen.

2. A dye according to Claim 1, wherein $R_1$ is chlorine or especially hydrogen.

3. A dye according to Claim 1, wherein c $X_2$ and $X_3$ is an $SO_3$ group and the other drogen.

4. A dye of the Formula (II)

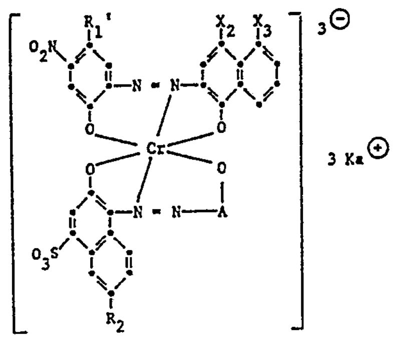

(II)

wherein

A is the radical of 1-hydroxynaphthalene or 2-hydroxynaphthalene.

$R_1'$ is chlorine or especially hydrogen,

$R_2$ is hydrogen or nitro,

$Ka^{\oplus}$ is a cation, and one of

$X_2$ and $X_3$ is an $SO_3$ group and the other is hydrogen, $X_3$ being hydrogen when $R_1'$ is chlorine and $R_2$ is hydrogen.

5. A process for the preparation of a dye of the Formula (I) according to Claim 1, which process comprises treating a mixture of the dye of the Formula (III)

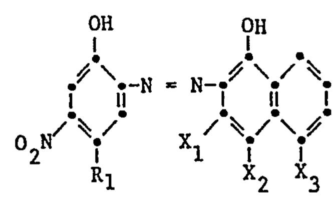

(III)

and the dye the Formula (IV)

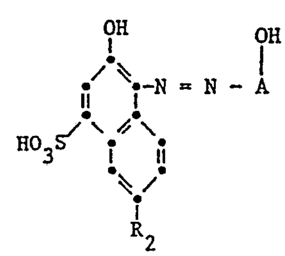

(IV)

in which formulae $R_1$, $R_2$ and A are as defined for Formula (I), and one of $X_1$, $X_2$ and $X_3$ is an $SO_3H$ group and the other two are hydrogen, $X_3$ being hydrogen when $R_1$ is chlorine and $R_2$ is hydrogen, with a chromium donor; or preparing the 1:1 chro-

## Revendications

1. Colorants à complexe métallifère, qui correspondent à la formule (I)

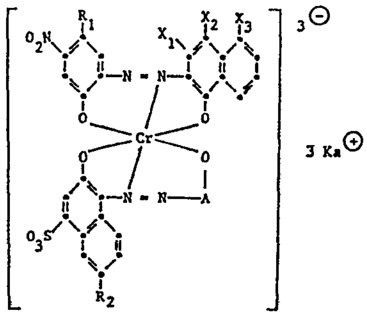

(I)

dans laquelle

A est le résidu du 1-hydroxynaphtalène ou du 2-hydroxynaphtalène,

$R_1$ est l'hydrogène, le groupe chloro ou méthyle,

$R_2$ est l'hydrogène, le groupe nitro, le chlore, et

$Ka^+$ est un cation et, sur les substituants $X_1$, $X_2$ et $X_3$, l'un est un groupe $SO_3$ et les deux autres sont l'hydrogène, $X_3$ étant l'hydrogène quand $R_1$ est le chlore, et $R_2$ l'hydrogène.

2. Colorants selon la revendication 1, dans lesquels $R_1$ est le chlore ou en particulier l'hydrogène.

3. Colorants selon la revendication 1, dans lesquels l'un des substituants $X_2$ ou $X_3$ est un groupe $SO_3$ et l'autre est l'hydrogène.

4. Colorants de formule (II)

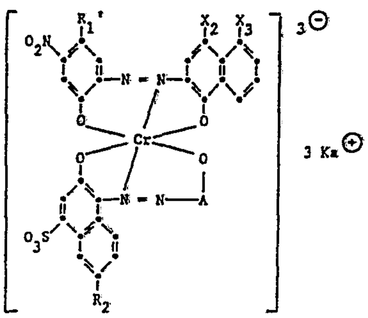

(II)

dans laquelle

A est le résidu du 1-hydroxynaphtalène ou du 2-hydroxynaphtalène,

$R_1'$ est le chlore ou en particulier l'hydrogène,

$R_2$ est l'hydrogène ou le groupe nitro,

$Ka^{\oplus}$ est un cation et les substituants $X_2$ et $X_3$ sont l'un un groupe $SO_3$ et l'autre l'hydrogène, $X_3$ étant l'hydrogène quand $R_1'$ est le chlore et $R_2$ l'hydrogène.

5. Procédé pour la préparation de colorants selon la revendication 1, de formule (I), caractérisé en ce qu'on traite un mélange du colorant de formule (III)

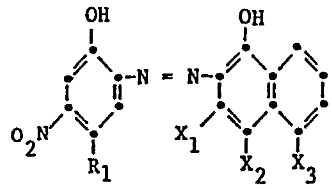

(III)

et du colorant de formule (IV)

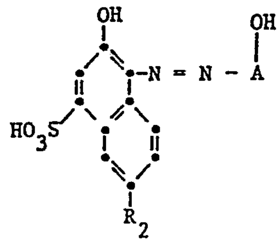

(IV)

dans lesquelles $R_1$, $R_2$ et A ont la signification donnée pour la formule (I) et les substituants $X_1$, $X_2$ et $X_3$ sont, l'un un groupe $SO_3H$ et les deux autres l'hydrogène $X_3$ étant l'hydrogène quand $R_1$ est le chlore et $R_2$ l'hydrogène, avec un composé cédant du chrome, ou en ce qu'on prépare le complexe de chrome 1:1 d'un colorant de formule (III) ou d'un colorant de formule (IV), puis qu'on fait réagir ce dernier sur le colorant non-métallé respectivement de formule (IV) ou (III).

6. Utilisation des colorants selon la revendication 1, de formule (I), pour teindre la laine, le polyamide et en particulier les cuirs et peaux.